# FASCICULE DE BREVET EUROPEEN

(11) **EP 0 814 440 B1**
(45) Date de publication et mention de la délivrance du brevet: **02.05.2002**
(21) Numéro de dépôt: 97401415.1
(22) Date de dépôt: 19.06.1997
(51) Int. Cl.: G07F 7/02

(54) **Procédé de rechargement de cartes prépayées virtuelles**
Verfahren zum Wiederaufladen von vorausbezahlten virtuellen Karten
Method for recharging prepaid virtual cards

(30) Priorité: 21.06.1996 FR 9607761
(43) Date de publication de la demande: 29.12.1997
(73) Titulaire: FRANCE TELECOM, 75015 Paris (FR)
(72) Inventeur: Milano, Sophie, 75015 Paris (FR); Boulot, Olivier, 78000 Versailles (FR); Arditti, David, 92140 Clamart (FR)
(74) Mandataire: Dubois-Chabert, Guy

(56) Documents cités:
- EP-A- 0 224 147
- EP-A- 0 420 466
- EP-A- 0 451 057
- EP-A- 0 698 987
- GB-A- 2 171 877
- GB-A- 2 215 897
- US-A- 3 602 695
- US-A- 3 984 660
- US-A- 5 352 876

## Description

### Domaine technique

La présente invention concerne un procédé de rechargement de cartes prépayées virtuelles.

### Etat de la technique antérieure

Une carte prépayée permet à son porteur de recevoir un service de la part d'un fournisseur de service, le paiement de ce service étant réalisé par avance lors de l'achat de la carte.

On doit distinguer la carte prépayée virtuelle de la carte prépayée non virtuelle. Dans le premier cas, toutes les caractéristiques de la carte (en particulier son crédit) sont gérées par un serveur centralisé. Dans le second, c'est la carte elle-même qui contient ces informations. La télécarte est un exemple de carte prépayée non virtuelle (voir EP-A-0 224 147).

L'invention ne concerne que les cartes prépayées virtuelles. A la différence des cartes prépayées non virtuelles, qui sont nécessairement constituées par un dispositif matériel, les cartes prépayées virtuelles peuvent être de deux sortes :
- les cartes prépayées virtuelles immatérielles, qui sont constituées d'un simple numéro ;
- les cartes prépayées virtuelles matérielles, qui sont constituées d'un dispositif physique.

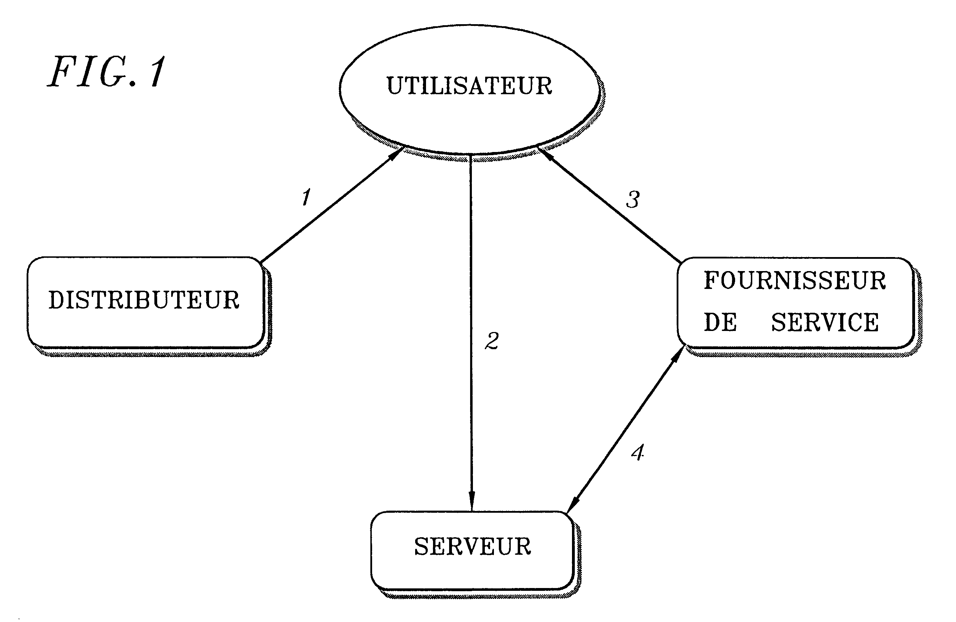

L'architecture d'un système fonctionnant sur le principe des cartes prépayées virtuelles est illustré sur la figure.

Sur cette figure on a les opérations suivantes :
1 : vente d'une carte prépayée virtuelle
2 : authentification de la carte prépayée virtuelle
3 : fourniture d'un service
4 : dialogue permettant au fournisseur de service de :
   - connaître le crédit restant et les autres paramètres de la carte prépayée virtuelle,
   - mettre à jour le crédit de la carte prépayée virtuelle.

On distingue ainsi plusieurs phases dans la vie d'une carte prépayée virtuelle.

### • L'achat

L'utilisateur achète auprès d'un distributeur une carte prépayée virtuelle. Elle est initialement créditée d'un certain nombre d'unités, correspondant à son prix d'achat. Une unité permet de payer une part indivisible d'un service. Ce peut être de manière générale une unité monétaire, dans le cas d'une prestation téléphonique une taxe de base, ou une minute de communication ou bien toute autre fraction d'un service.

La gestion de la carte prépayée virtuelle est réalisée par un serveur informatique dont le rôle est de tenir à jour le crédit en unités de la carte ainsi que certaines données complémentaires (dates de validité, mise en opposition, etc....)

### • L'utilisation

Pour obtenir un service de la part du fournisseur de service, l'utilisateur doit d'abord prouver qu'il est en possession d'une carte prépayée virtuelle. Pour cela, le serveur authentifie la carte.

Cette fonction d'authentification consiste à vérifier la validité d'une séquence de symboles qui est transmise au serveur :
- pour les cartes prépayées virtuelles immatérielles, cette séquence est le numéro de la carte, que le porteur communique au serveur ;
- pour les cartes prépayées virtuelles matérielles, à chaque activation par son porteur une séquence différente de symboles est calculée de manière cryptographique par le dispositif physique ; le dispositif peut la transmettre lui-même au serveur ou être capable seulement de la communiquer au porteur, qui la transmet lui-même ; ceci constitue une méthode d'authentification sûre ;
- on peut aussi imaginer, pour leur intérêt ergonomique, des cartes prépayées virtuelles matérielles (plus simples que les cartes prépayées virtuelles immatérielles mais moins sûres que les cartes prépayées matérielles) qui émettent des séquences de symboles fixes.

Si l'authentification de la carte prépayée virtuelle est réussie, le serveur indique au fournisseur de service le crédit restant sur la carte de l'utilisateur. Cette information peut, de manière optionnelle, être transmise à l'utilisateur.

Le fournisseur de service peut alors (en s'adressant au serveur) débiter le compte de l'utilisateur en fonction du service rendu. Ce débit peut être réalisé soit avant la fourniture du service, soit au fur et à mesure de la fourniture du service, soit une fois le service rendu, soit par une combinaison de ces divers procédés.

### • La fin de la carte prépayée virtuelle

La carte prépayée virtuelle devient inutilisable quand sa date de validité est dépassée ou quand son crédit est épuisé.

On peut vouloir recharger la carte prépayée virtuelle. Il n'est en effet pas toujours souhaitable que la carte soit définitivement inutilisable lorsque son crédit est épuisé, en particulier dans les cas suivants :
- pour les cartes prépayées virtuelles immatérielles, où changer de carte prépayée à chaque fois que le crédit est épuisé entraîne le changement du numéro de la carte et impose donc un nouvel effort de mémorisation pour le porteur ;
- pour les cartes prépayées virtuelles matérielles, où le coût propre du dispositif ne peut être négligé : le dispositif ne peut donc pas être considéré comme jetable après utilisation.

La gestion de la fin du crédit d'une carte prépayée virtuelle est délicate. On pourrait, comme cela est fait pour la Télécarte dans les publiphones, proposer d'enchaîner deux cartes prépayées virtuelles. Cependant, cela nécessiterait d'authentifier la seconde carte prépayée en cours d'exécution du service, ce qui est techniquement et ergonomiquement difficile.

Dans le cadre des cartes prépayées virtuelles, on peut distinguer actuellement deux classes de techniques de rechargement : le "rechargement par le distributeur" et le "rechargement par l'utilisateur".

### • Rechargement par le distributeur

L'utilisateur doit se rendre chez le distributeur pour recharger sa carte prépayée virtuelle. Il donne au distributeur la somme correspondant au montant du rechargement. En échange, le distributeur se connecte au serveur qui gère le crédit de la carte prépayée virtuelle à recharger et donne l'ordre de créditer la carte prépayée virtuelle du montant voulu.

Ce système présente les inconvénients suivants :
- il est tout d'abord indispensable que l'opération de rechargement réalisée par le distributeur soit sécurisée de manière sérieuse. En effet, un fraudeur qui se ferait passer pour un distributeur pourrait recharger des cartes prépayées virtuelles sans contrepartie pour le fournisseur de service. Il faut donc envisager au minimum une authentification active ("habilitation") entre distributeur et serveur, voire la signature électronique par le distributeur de la totalité de la transaction de rechargement. Ceci nécessite l'utilisation d'un dispositif cryptographique (carte à microprocesseur, authentifieur...) par le distributeur ;
- alors que le mécanisme de vente d'une carte prépayée virtuelle est une opération simple et banale (le distributeur achète des cartes prépayées virtuelles au fournisseur de service et les revend avec ou sans bénéfice à l'utilisateur), l'opération de rechargement est beaucoup plus complexe :
   - le distributeur doit se connecter à un serveur, s'authentifier, réaliser la transaction, et éventuellement la signer,
   - la circulation du flux monétaire est plus complexe : le distributeur doit reverser au fournisseur de service tout ou partie de l'argent qui lui a été donné par l'utilisateur,
   - vu de l'utilisateur, le rechargement consiste à échanger un bien matériel (son argent) contre une transaction immatérielle réalisée par le distributeur en qui l'utilisateur n'a pas forcément confiance ; vérifier que la carte prépayée virtuelle a bien été rechargée suppose une nouvelle connexion au serveur qui devra de préférence être réalisée par l'utilisateur ; on est loin d'une transaction d'achat classique où l'on échange son argent contre un bien.

Toutes ces raisons font que le rechargement d'une carte prépayée virtuelle par le distributeur est une opération bien plus complexe que la vente, et nécessite une infrastructure lourde et coûteuse.

### • Rechargement par l'utilisateur

L'utilisateur se connecte lui-même au serveur et paye lui-même le rechargement. Pour réaliser ce paiement, l'utilisateur doit au minimum disposer d'un compte bancaire pour pouvoir transférer l'argent de son compte vers celui du fournisseur de service. Le fournisseur de service est alors confronté aux risques classiques du paiement par carte bancaire.

Ces risques sont aggravés d'une part par l'anonymat de la communication utilisateur/serveur (téléphone, minitel, internet..) et d'autre part, par l'anonymat de la carte prépayée virtuelle elle-même. En effet, si le fournisseur de service s'aperçoit d'une fraude après avoir réalisé le rechargement, il peut encore mettre la carte en opposition, mais si le crédit est déjà dépensé il n'a cette fois plus aucun recours.

Seule l'utilisation d'une carte de crédit à microprocesseur avec mise en oeuvre des mécanismes cryptographiques de télépaiement permet d'obtenir la sécurité nécessaire dans ce contexte d'utilisation. Cela suppose la présence d'un lecteur de carte à microprocesseur côté utilisateur et limite donc fortement la population capable de réaliser un rechargement de ce type.

L'objet de l'invention est de proposer un procédé de rechargement des cartes prépayées virtuelles qui ne présente pas les inconvénients décrits ci-dessus.

### Exposé de l'invention

La présente invention propose un procédé de rechargement de cartes prépayées, caractérisé en ce qu'on réalise un transfert du crédit d'une carte prépayée à une autre, ce transfert étant réalisé par l'utilisateur lui-même au cours d'une connexion avec le serveur, et consistant à :
- dans une première étape, authentifier une première carte prépayée virtuelle à débiter ; puis
- dans une seconde étape, à authentifier une seconde carte prépayée virtuelle à créditer ;
- dans une troisième étape, virer tout ou partie du crédit de la première carte vers la seconde carte.

Cette connexion est de même nature que la connexion d'utilisation d'une carte prépayée virtuelle, en particulier une authentification telle que la première ou la seconde étape est réalisée à chaque connexion d'utilisation. Il n'y a donc que peu de modifications à apporter au serveur.

L'utilisateur n'a aucun mal à s'adapter à ce nouveau dialogue puisqu'il est peu différent du dialogue d'utilisation auquel il est habitué. En particulier, sa confiance dans le bon fonctionnement d'une transaction d'utilisation se reporte naturellement sur la transaction de rechargement.

Le fournisseur des services est toujours rémunéré en avance par le distributeur et garde donc tous les avantages du prépaiement. Enfin le fournisseur de service ne peut en aucun cas perdre d'argent dans une transaction de rechargement.

Le procédé décrit résout le problème de la gestion de la fin de crédit d'une carte prépayée : il suffit de transférer le crédit restant sur une carte prépayée neuve, par exemple.

Le procédé de l'invention présente les avantages suivants :
- le rechargement proposé utilise le mode de distribution habituel des cartes prépayées virtuelles sans le modifier (c'est-à-dire sans ajouter de nouvelles opérations) ;
- le rechargement est réalisé par l'utilisateur lui-même ;
- le rechargement est sûr à la fois pour le fournisseur de service et pour l'utilisateur ;
- le rechargement ne nécessite aucun matériel supplémentaire ni côté utilisateur, ni côté distributeur.

### Brève description des dessins

La figure illustre l'architecture d'un système fonctionnant sur le principe des cartes prépayées virtuelles.

### Exposé détaillé de modes de réalisation

L'idée de base du procédé de l'invention est de permettre le transfert du crédit d'une carte prépayée virtuelle vers une autre. Ce transfert est réalisé par l'utilisateur lui-même au cours d'une connexion avec le serveur. La transaction consiste à :
- dans une première étape, authentifier la carte prépayée virtuelle à débiter ; puis
- dans une seconde étape, à authentifier la carte prépayée virtuelle à créditer ;
- dans une troisième étape, virer tout ou partie du crédit de la première carte vers la seconde carte.

Cette connexion est de même nature que la connexion d'utilisation d'une carte prépayée virtuelle, en particulier une authentification telle que la première ou la seconde étape est réalisée à chaque connexion d'utilisation. Il n'y a donc que peu de modifications à apporter au serveur.

L'utilisateur n'a aucun mal à s'adapter à ce nouveau dialogue puisqu'il est peu différent du dialogue d'utilisation auquel il est habitué. En particulier, sa confiance dans le bon fonctionnement d'une transaction d'utilisation se reporte naturellement sur la transaction de rechargement.

Le fournisseur des services est toujours rémunéré en avance par le distributeur et garde donc tous les avantages du prépaiement. Enfin le fournisseur de service ne peut en aucun cas perdre d'argent dans une transaction de rechargement.

Les principes généraux expliqués ci-dessus peuvent avantageusement être contraints de la manière suivante :
- la carte prépayée virtuelle à créditer est une carte prépayée virtuelle immatérielle dont l'utilisateur a mémorisé le numéro, ou une carte prépayée virtuelle matérielle ;
- la carte prépayée virtuelle à débiter est une carte prépayée virtuelle immatérielle (un simple numéro) qui est achetée par l'utilisateur auprès d'un distributeur, exactement comme toute autre carte prépayée virtuelle ; ainsi le distributeur se cantonne à son rôle de simple revendeur ;
- le transfert de crédit entre la carte prépayée virtuelle à débiter et la carte prépayée virtuelle à créditer épuise le crédit de la carte prépayée virtuelle à débiter. Dans ce cas, il n'y a aucun avantage à utiliser une méthode d'authentification avec séquence variable puisque la séquence (fixe) n'est utilisée qu'une seule fois ; ceci justifie complètement l'utilisation de la carte prépayée virtuelle immatérielle pour le rechargement ;
- si l'on contraint les fonctions des types de carte prépayée virtuelle de la manière suivante :
   - les cartes prépayées virtuelles matérielles avec authentification par séquence variable sont les seules cartes prépayées virtuelles permettant l'utilisation du service,
   - les cartes prépayées virtuelles immatérielles ne permettent que le rechargement des cartes prépayées virtuelles matérielles.

On obtient un système complètement sûr vis-à-vis de l'écoute par un fraudeur. Cette configuration est particulièrement judicieuse car les cartes prépayées virtuelles matérielles, dont le prix n'est pas négligeable, sont rechargées et peuvent donc être utilisées pendant une période qui n'est limitée que par l'usure du dispositif, alors que les cartes prépayées virtuelles immatérielles, dont le coût est quasi nul, sont jetées après utilisation.

## Revendications

1. Procédé de rechargement de cartes prépayées virtuelles, **caractérisé en ce qu'**on réalise un transfert du crédit d'une carte prépayée virtuelle vers une autre, ce transfert étant réalisé par l'utilisateur lui-même au cours d'une connexion avec le serveur, et consistant à :
- dans une première étape, authentifier une première carte prépayée virtuelle à débiter ; puis
- dans une seconde étape, à authentifier une seconde carte prépayée virtuelle à créditer ;
- dans une troisième étape, virer tout ou partie du crédit de la première carte vers la seconde carte.

2. Procédé selon la revendication 1, **caractérisé en ce que** la carte prépayée virtuelle à créditer est une carte prépayée virtuelle immatérielle dont l'utilisateur a mémorisé le numéro.

3. Procédé selon la revendication 1, **caractérisé en ce que** la carte prépayée virtuelle à créditer est une carte prépayée virtuelle matérielle.

4. Procédé selon la revendication 1, **caractérisé en ce que** la carte prépayée virtuelle à débiter est une carte prépayée virtuelle immatérielle qui est achetée par l'utilisateur auprès d'un distributeur.

5. Procédé selon la revendication 1, **caractérisé en ce que** le transfert de crédit entre la carte prépayée virtuelle à débiter et la carte prépayée virtuelle à créditer épuise le crédit de la carte prépayée virtuelle à débiter.

6. Procédé selon la revendication 3, **caractérisé en ce que** les cartes prépayées à créditer sont des cartes prépayées virtuelles matérielles avec authentification par séquence variable.

7. Procédé selon la revendication 3 ou la revendication 4, **caractérisé en ce que** les cartes prépayées à débiter sont des cartes prépayées virtuelles immatérielles qui ne permettent que le rechargement de cartes prépayées virtuelles matérielles à créditer.

8. Procédé selon la revendication 7, **caractérisé en ce que** les cartes prépayées à créditer sont des cartes prépayées virtuelles matérielles avec authentification par séquence variable.

## Patentansprüche

1. Verfahren zum Wiederaufladen von vorausbezahlten virtuellen Karten,
**dadurch gekennzeichnet, dass** man einen Transfer des Kredits von einer vorausbezahlten virtuellen Karte zu einer anderen durchführt, wobei dieser Transfer vom Benutzer selbst während einer Verbindung mit dem Server ausgeführt wird und darin besteht:
- in einem ersten Schritt eine erste, zu debitierende vorausbezahlte virtuelle Karte zu authentifizieren; dann
- in einem zweiten Schritt eine zweite, zu kreditierende vorausbezahlte virtuelle Karte zu authentifizieren; und
- in einem dritten Schritt den Kredit ganz oder teilweise von der ersten Karte auf die zweite Karte zu überweisen.

2. Verfahren nach Anspruch 1, **dadurch gekennzeichnet, dass** die zu kreditierende vorausbezahlte virtuelle Karte eine immaterielle vorausbezahlte virtuelle Karte ist, deren Benutzer sich die Nummer eingeprägt hat.

3. Verfahren nach Anspruch 1, **dadurch gekennzeichnet, dass** die zu kreditierende vorausbezahlte virtuelle Karte eine materielle vorausbezahlte virtuelle Karte ist.

4. Verfahren nach Anspruch 1, **dadurch gekennzeichnet, dass** die zu debitierende vorausbezahlte virtuelle Karte eine immaterielle vorausbezahlte virtuelle Karte ist, die vom Benutzer bei einer Ausgabestelle gekauft wird.

5. Verfahren nach Anspruch 1, **dadurch gekennzeichnet, dass** der Transfer des Kredits zwischen der zu debitierenden vorausbezahlten virtuellen Karte und der zu kreditierenden vorausbezahlten virtuellen Karte den Kredit der zu debitierenden vorausbezahlten virtuellen Karte restlos ausschöpft.

6. Verfahren nach Anspruch 3, **dadurch gekennzeichnet, dass** die zu kreditierenden vorausbezahlten Karten materielle vorausbezahlte virtuelle Karten mit Authentifizierung mittels variabler Sequenz sind.

7. Verfahren nach Anspruch 3 oder Anspruch 4, **dadurch gekennzeichnet, dass** die zu debitierenden vorausbezahlten Karten virtuell vorausbezahlte immaterielle Karten sind, die nur die Wiederaufladung von zu kreditierenden materiellen vorausbezahlten virtuellen Karten ermöglichen.

8. Verfahren nach Anspruch 7, **dadurch gekennzeichnet, dass** die zu kreditierenden vorausbezahlten Karten materielle vorausbezahlte virtuelle Karten mit Authentifizierung mittels variabler Sequenz sind.

## Claims

1. Process for the reloading of virtual prepaid cards, wherein a transfer of credit takes place from one virtual prepaid card to another, said transfer being performed by the user during a connection to the server and consisting of:
- in a first stage, authenticating a first virtual prepaid card to be debited, then
- in a second stage, authenticating a second virtual prepaid card to be credited,
- in a third stage, transferring all or part of the credit from the first card to the second card.

2. Process according to claim 1, wherein the virtual prepaid card to be credited is an immaterial, virtual prepaid card, whereof the user has memorized the number.

3. Process according to claim 1, wherein the virtual prepaid card to be credited is a material, virtual prepaid card.

4. Process according to claim 1, wherein the virtual prepaid card to be credited is an immaterial, virtual prepaid card, which is bought by the user from a distributor.

5. Process according to claim 1, wherein the credit transfer between the virtual prepaid card to be debited and the virtual prepaid card to be credited exhausts the credit of the virtual prepaid card to be debited.

6. Process according to claim 3, wherein the prepaid cards to be credited are material, virtual prepaid cards with authentication by variable sequence.

7. Process according to claim 3 or 4, wherein the prepaid cards to be debited are immaterial, virtual prepaid cards, which only allow the reloading of material, virtual prepaid cards to be credited.

8. Process according to claim 7, wherein the prepaid cards to be credited are material, virtual prepaid cards with authentication by variable sequence.
